(19) Europäisches Patentamt
European Patent Office
Office européen des brevets

(11) **EP 1 914 622 A2**

(12) **EUROPEAN PATENT APPLICATION**

(43) Date of publication:
**23.04.2008 Bulletin 2008/17**

(51) Int Cl.:
*G06F 3/048* (2006.01)    *G06F 1/16* (2006.01)

(21) Application number: **07118526.8**

(22) Date of filing: **15.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.10.2006 KR 20060100505**
**08.01.2007 KR 20070002140**

(71) Applicant: **Samsung Electronics Co., Ltd**
**Suwon-si, Gyeonggi-do 443-742 (KR)**

(72) Inventors:
• **Cho, Sung-jung**
**c/o Samsung Adv. Inst. of Technology**
**Gyeonggi-do 446-712 (KR)**

• **Choi, Chang-kyu**
**c/o Samsung Adv. Inst. of Technology**
**Gyeonggi-do 446-712 (KR)**
• **Kim, Yeun-bae**
**c/o Samsung Adv. Inst. of Technology**
**Gyeonggi-do 446-712 (KR)**
• **Lee, Kwang-hyeon**
**c/o Samsung Advanced Institute of Technology**
**Gyeonggi-do 446-712 (KR)**
• **Sung, Young-hun**
**c/o Samsung Advanced Institute of Technology**
**Gyeonggi-do 446-712 (KR)**

(74) Representative: **Grootscholten, Johannes A.M. et al**
**Arnold & Siedsma**
**Sweelinckplein 1**
**2517 GK  Den Haag (NL)**

(54) **Method and apparatus for moving list on picture plane**

(57)    Provided are an apparatus and method for moving a list on a picture plane. The apparatus for moving a list on a picture plane includes a centripetal acceleration control module providing acceleration in the direction in which an image moves, with respect to an amount of movement of the center of the image relative to the center of a picture plane of a digital device, a movement resistance control module calculating a resistance corresponding to the provided acceleration, and applying the resistance to the image, a picture plane movement parameter control module calculating the movement speed of the image displayed on the picture plane and the distance moved by the center of the image, based on at least one of a current input tilt angle, the acceleration value, and the resistance value, thereby updating the movement speed and the distance moved by the center of the image.

FIG. 2B

EP 1 914 622 A2

**Description**

CROSS-REFERENCE TO RELATED APPLICATION

This application claims priority from Korean Patent Application Nos. 10-2006-0100505 and 10-2007-0002140 filed on October 16, 2006 and January 8, 2007 respectively, in the Korean Intellectual Property Office, the disclosure of which is incorporated herein by reference in its entirety.

BACKGROUND OF THE INVENTION

1. Field of the Invention

The present invention relates to an apparatus and method for moving a list on a picture plane. More particularly, the present invention relates to an apparatus and method for moving a list on a picture plane, which allows a user to adjust the extent of a tilt operation for viewing a previous or next image on the picture plane on which a current image is displayed by updating the picture plane in real-time andproviding feedback during the tilt operation when tilt-based image viewing is performed in a portable digital device.

2. Description of the Related Art

With the influence of digital convergence, the functions of portable digital devices, such as PDAs, mobile phones, MP3 players, and digital cameras, have been increasing. However, the miniaturization of devices has further restricted the placement of buttons on the devices. Accordingly, there is a need for an input method for portable digital devices other than button manipulation.

In response to this, in Korean Laid-Open Patent Application No. 2004-092217, entitled a met hod of displaying images in a mobile communication terminal', a method of displaying conditional dynamic range of images by detecting the tilt direction and angle, which are related to the state or pose of a terminal, through a tilt-based input method that does not need a button, has been suggested.

"Tilting" refers to a motion of tilting an object from a horizontal state. In the conventional technology mentioned above, when images are viewed, the positions of images in a list are changed in real-time in response to a tilt operation, without a need to push buttons for moving images. In this way, images can be viewed continuously.

However, in some cases, an undesired image may be displayed by performing tilt-based image moving. In such cases, the undesirably displayed image may move back and forth many times. In addition, even the image being moved may be partially presented.

A user has to perform the tilt operation very precisely, thereby making manipulation of the tilt-based digital device difficult.

SUMMARY

The present invention provides an apparatus and method for moving a list on a picture plane, which enables a user to adjust the extent of a tilt operation, thereby increasing user's convenience when the user views a list of images and text documents on the picture plane.

The above stated object as well as other objects, features and advantages, of the present invention will become clear to those skilled in the art upon review of the following description, the attached drawings and appended claims.

According to an aspect of the present invention, there is provided an apparatus for moving a list on a picture plane, the apparatus including a centripetal acceleration control module providing acceleration in the direction in which an image moves, with respect to an amount of movement of the center of the image relative to the center of a picture plane of a digital device, a movement resistance control module calculating a resistance corresponding to the provided acceleration, and applying the resistance to the image, a picture plane movement parameter control module calculating the movement speed of the image displayed on the picture plane and the distance moved by the center of the image, basedon at least one of a current input tilt angle, the acceleration value, and the resistance value, thereby updating the movement speed and the distance moved by the center of the image.

According to another aspect of the present invention, there is provided an apparatus for moving a list on a picture plane, including a tilt based speed control module calculating a speed based on input tilt angles and providing the calculated speed to an image, a center convergence speed control module calculating a center convergence speed with respect to the center of the picture plane of a digital device and providing the calculated center convergence speed to the image, a picture plane movement speed control module calculating a maximum movement speed of the image based on the position of the center of the image and providing the calculated maximum movement speed to the image,

and a picture plane parameter control module updating the movement speed of the image and the moving position of the center of the image by calculating the same based on the tilt based speed, the center convergence speed and the maximum movement speed.

According to still another aspect of the present invention, there is provided a method of moving a list on a picture plane, the method including controlling centripetal acceleration by providing acceleration in the direction in which an image moves, with respect to an amount of movement of the center of the image relative to the center of a picture plane of a digital device, controlling movement resistance by calculating a resistance corresponding to the provided acceleration and applying the resistance to the image, controlling picture plane movement parameter by calculating the movement speed of the image displayed on the picture plane and the distance moved by the center of the image, based on at least one of a current input tilt angle, the acceleration value, and the resistance value, and updating the movement speed and the distance moved by the center of the image.

According to a further aspect of the present invention, there is provided a method of moving a list on a picture plane including controlling a tilt based speed by calculating a speed based on input tilt angles and providing the calculated speed to the image, controlling a center convergence speed by calculating a center convergence speed with respect to the center of the picture plane of a digital device andproviding the calculated center convergence speed to the image, controlling a picture plane movement speed by calculating a maximum movement speed of the image based on the position of the center of the image and providing the calculated maximum movement speed to the image, and controlling a picture plane parameter by updating the movement speed of the image and the moving position of the center of the image by calculating the same based on the tilt based speed, the center convergence speed and the maximum movement speed.

BRIEF DESCRIPTION OF THE DRAWINGS

The above and other features and advantages of the present invention will become more apparent by describing in detail an exemplary embodiment thereof with reference to the attached drawings in which:

FIG. 1 illustrates an ordinary process of tilt-based viewing of images;
FIGS. 2A through 2C are diagrams for analyzing tilt manipulations in tilt-based viewing of ordinary images;
FIG. 3 is a graph illustrating the analyzed contents illustrated in FIGS. 2A through 2C;
FIG. 4 is a block diagram illustrating a structure of an apparatus for moving a list on a picture plane according to an embodiment of the present invention;
FIGS. 5A and 5B are graphs illustrating operations of a centripetal acceleration module according to an embodiment of the present invention;
FIGS. 6A and 6B are graphs illustrating operations of a movement resistance control module according to an embodiment of the present invention;
FIG. 7 is a graph illustrating operations of a picture plane coordinate control module according to an embodiment of the present invention; and
FIG. 8 is a block diagram illustrating a structure of an apparatus for moving a list on a picture plane according to another embodiment of the present invention;
FIG. 9 is a graph illustrating the picture plane movement speed controlled by a picture plane movement speed control module;
FIG. 10 is a flowchart illustrating operations of a method of viewing continuous images through tilt operations according to an embodiment of the present invention; and
FIG. 11 is a flowchart illustrating operations of a method of viewing continuous images through tilt operations according to another embodiment of the present invention.

DETAILED DESCRIPTION OF THE INVENTION

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

An apparatus and method for moving a list on a picture plane will be described hereinafter with reference to flowchart illustrations of methods according to exemplary embodiments of the invention.

It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to create means for implementing the functions specified in the flowchart block or blocks.

These computer program instructions may also be stored in a computer usable or computer-readable memory that can direct a computer or other programmable data processing apparatus to function in a particular manner, such that the instructions implement the function specified in the flowchart block or blocks.

The computer program instructions may also be loaded onto a computer or other programmable data processing apparatus to cause a series of operational steps to be performed on the computer or other programmable apparatus to produce a computer implemented process for implementing the functions specified in the flowchart block or blocks.

In addition, each block may represent a module, a segment, or a portion of code, which may comprise one or more executable instructions for implementing the specified logical functions.

It should also be noted that in other implementations, the functions noted in the blocks may occur in a different order to the order illustrated or in different configurations of hardware and software.

For example, two blocks shown in succession may, in fact, be executed substantially concurrently, or the blocks may sometimes be executed in the reverse order, depending on the functionality involved.

The present invention will now be described more fully with reference to the accompanying drawings, in which an exemplary embodiment of the invention is shown.

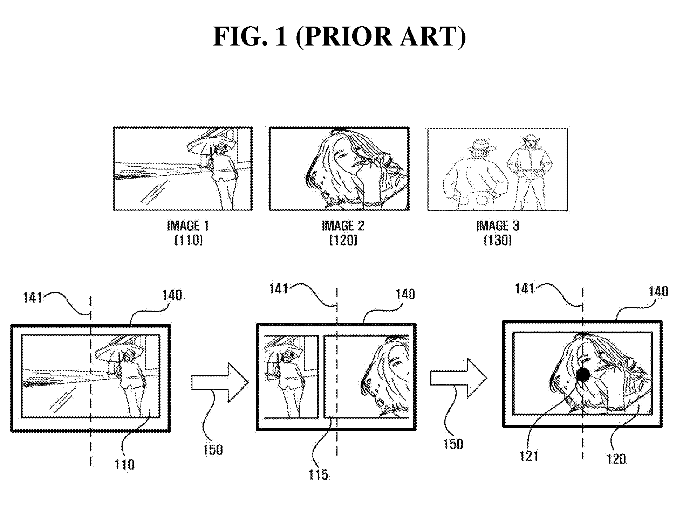

FIG. 1 illustrates an ordinary process of tilt-based viewing of images.

In a tilt-based image viewing digital device, images can be viewed in real-time through a tilt operation in which the digital device is tilted from a horizontal state, without a need to push a button.

For example, when a plurality of images 110, 120, and 130 exist in a tilt-based digital device and a user tilts the device to the left (Tilt leftward), the plurality of images 110, 120 and 130 move to the left, and are displayed on a picture plane window 140 of the digital device.

Also, when the user tilts the device to the left, the plurality of images 110, 120, and 130 may move to the right, and the direction of a tilt operation by a user is not limited to the direction in which an image moves.

Assuming that a current image viewed by the user is the image 110, and the user tilts the tilt-based digital device to the left in order to view the next image 120, the image that is displayed in real-time on the picture plane window 140 of the device, sequentially becomes the image 110, an image 115, and the image 120.

Here, the image 115 is an image indicatingaprocess of changing the displayed image from the image 110 to the image 120, that is, an image including a part of the image 110 and a part of the image 120. An arrow 150 indicates that the picture plane window 140 moves to a next stage.

Here, if the image 120 desired to be viewed is positioned at the center of the picture plane window 140, the user stops the tilt operation, maintains the device horizontally, thereby fixing the image 120 at the center of the picture plane window 140, and then, views the image 120.

For reference, the fixing of the image 120 at the center of the picture plane window 140 means making the center 141 of the picture plane window approach or coincide with the center 121 of the image 120 desired to be viewed. Though the center 141 of the picture plane window 140 and the center 121 of the image 120 are not actually seen to the user, in a general tilt-based digital device, if the device is maintained to be horizontal so that the entire image 120 can be seen on the picture plane window 140, the center 141 of the picture plane window 140 and the center 121 of the image 120 may be positioned close to each other or may coincide.

This image viewing method requires a delicate tilt operation from the user.

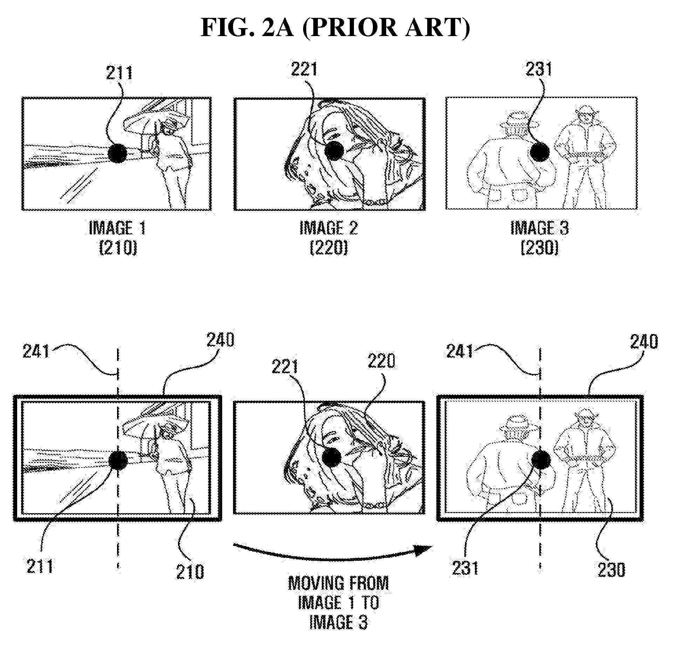

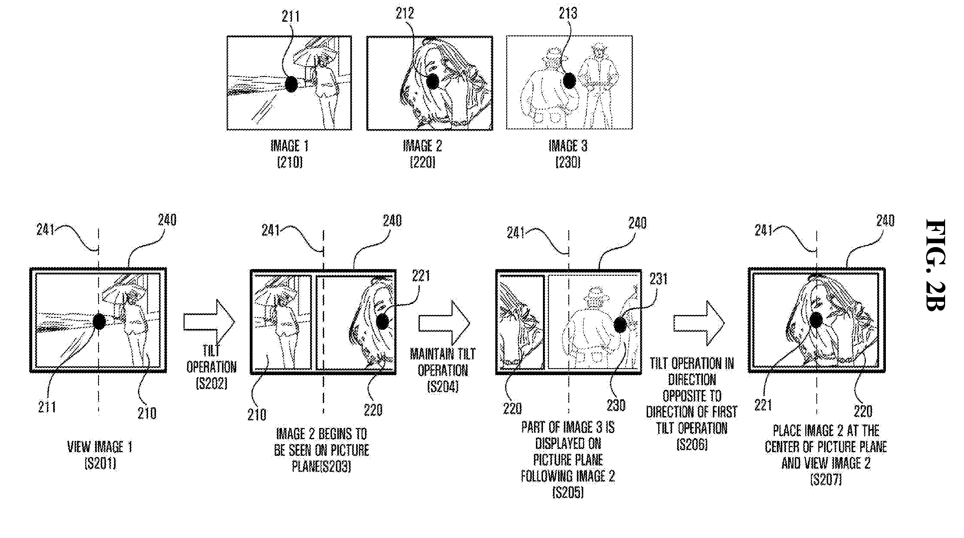

FIGS. 2A through 2C are diagrams for analyzing tilt manipulations in tilt-based viewing of ordinary images.

For convenience of explanation, it is assumedthat a plurality of images 210, 220 and 230 exist in a tilt-based digital device, including image 1 210, image 2 220, and image 3 230, and the center of each image is marked by a small dot 211, 212, and 213.

Also, it is assumed that the center of a picture plane window 240 of the tilt-based digital device is indicated by a dotted line 241, and a user is currently viewing image 1 210, and wants to view the next image 2 220.

FIG. 2A is a diagram illustrating a problem that occurs in a conventional tilt operation.

After the user views image 1 210, the user moves image 1 210 in response to a tilt operation in order to view the next image 2 220.

Here, unless the tilt operation is adjusted delicately, the center 221 of image 2 desired to be viewed by the user may not be placed at the center 241 of the picture plane window 240, and the center 241 of the picture plane window 240 may stop at the center 231 of image 3 230 after passing by the center 221 of image 2 220.

That is, when a tilt operation for moving to a next image desired to be viewed is performed, an image next to the desired image may be displayed, and this is referred to as 'overshoot'.

FIG. 2B is a diagram illustrating another problem that occurs in the conventional tilt operation, and this will now be explained with respect to each operation.

The user who is currently viewing image 1 210 performs a tilt operation in order to view image 2 220 in operation S202. On the picture plane window 240 of the digital device, a process of changing the displayed image from image 1 210 to image 2 220 is displayed in operation S203.

If the user sees a part of image 2 220 displayed on the picture plane window 240, the user maintains the tilt operation in order to place image 2 220 at the center 241 of the picture plane window, that is, in order to match the center 221 of image 2 220 with the center 241 of the picture plane window 240 in operation S204.

Here, unless the tilt operation is adjusted delicately, an overshoot, described above with reference to FIG. 2A, may occur or a phenomenon in which a part of image 2 220 and a part of image 3 230 are displayed on the picture plane window 240 occurs in operation S205.

In order to prevent the overshoot or the phenomenon in which parts of images are displayed, the user performs again a tilt operation in the direction opposite to the direction of the first tilt operation in operation S206. The tilt operations are repeatedly performed until the desired image 2 220 is positioned at the center 241 of the window picture plane 240. This is referred to as 'fluctuation'.

After the fluctuation, the user places the center 221 of image 2 220 at the center 241 of the picture plane window 240, and views image 2 220 in operation S207.

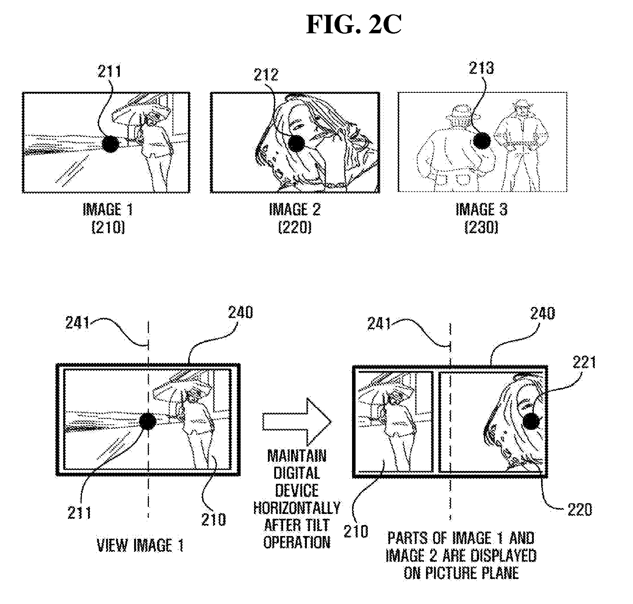

FIG. 2C is a diagram illustrating another problem that occurs in the conventional tilt operation.

The user who is viewing image 1 210 performs a tilt operation in order to view image 2 220, and while the images move due to the tilt operation, the user stops the tilt operation and then, maintains the digital device horizontally in order to view the image. In this case, only a part of the image may be seen on the picture plane window 240. This is referred to as 'partial presentation'.

If partial presentation occurs, the user performs again a tilt operation in the direction opposite to the direction of the first tilt operation and here, a fluctuation problem occurs.

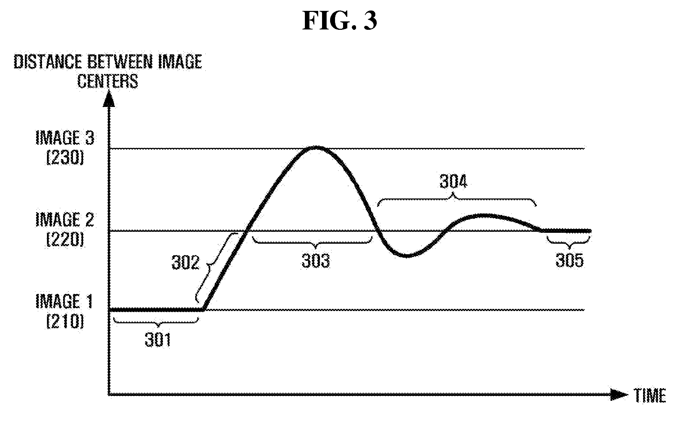

FIG. 3 is a graph illustrating the analyzed contents illustrated in FIGS. 2A through 2C.

The problems that can occur due to tilt operations when a list of images or text documents are viewed, as described above with reference to FIGS. 2A through 2C, can be expressed as the relationship between time and the centers of images as illustrated in FIG. 3.

In the graph, the X-axis indicates the flow of time, and the Y-axis indicates the distance between centers of images when images are arranged as a list.

Here, it is assumed that the user is currently viewing image 1 210 and performs a tilt operation in order to view image 2 220.

Interval 301 is an interval in which the user is currently viewing image 1 210, and is defined as a 'stable region' Interval 302 is an interval in which the user moves images in response to a tilt operation in order to view image 2 220, which is the next image, and interval 302 is defined as a 'moving region'.

Interval 303 is an overshoot interval in which unlike the intention of the user, image 3 230 is moved and displayed on the picture plane window 240. Interval 304 is an interval in which a user repeatedly performs a tilt operation in order to move image 2 220 back to the picture plane window 240, that is, a fluctuation interval.

Interval 305 is an interval in which image 2 is positioned at the center 241 of the window picture plane 240 after the fluctuation, and becomes a stable region like interval 301.

Generally, when images are viewed using a tilt operation, many problems, as described above, may occur, and the present invention suggests an apparatus and method to solve these problems.

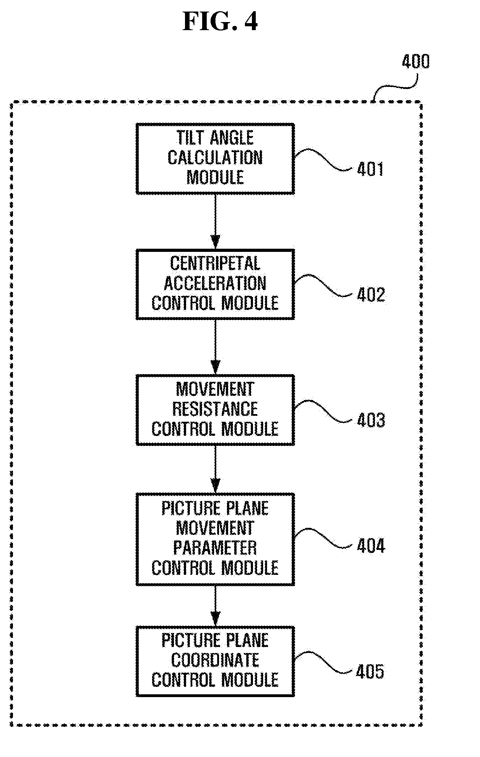

FIG. 4 is a block diagram illustrating a structure of an apparatus 400 for moving a list on a picture plane according to an embodiment of the present invention.

The apparatus 400 for moving a list on a picture plane includes a tilt angle calculation module 401 calculating a current tilt angle of a digital device, a centripetal acceleration control module 402 providing acceleration in the direction in which an image moves, with respect to an amount of movement of the center of the image relative to the center of the picture plane of the digital device, a movement resistance control module 403 calculating a resistance corresponding to the provided acceleration, and applying the resistance to the image, a picture plane movement parameter control module 404 calculating the movement speed of the image displayed on the picture plane and the distance moved by the center of the image, based on at least one of a current input tilt angle, the acceleration value, and the resistance value, thereby updating the movement speed and the distance moved by the center of the image, and a picture plane coordinate control module 405 controlling the movement of the image by determining whether or not the calculated the distance moved by the center of the image exists in a predetermined area. The term 'module', as used throughout the specification, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

The functionality provided for in the components and modules may be combined into fewer components and modules or further separated into additional components and modules.

In the apparatus 400, the tilt angle calculation module 401 calculates a current tilt angle of the digital device.

The tilt angle calculation module 401 may include a 3-axis acceleration sensor module, and can calculate the ratio between gravitational components measured in the 3-axis acceleration sensor, calculate a pitch angle in the vertical direction, and calculate a roll angle in the left and right direction, thereby calculating the current angle of the digital device.

Assuming that acceleration values measured in X-, Y- and Z-axis are denoted by Ax, Ay, and Az, respectively, the pitch angle and the roll angle are calculated according to the equation (1) :

$$ Roll \ \square \ \tan^{\square 1} \left( \frac{A_x}{A_y} \right) $$

$$ Pitch \ \square \ \tan^{\square 1} \left( \frac{A_z}{\sqrt{A_y^2 \ \square \ A_x^2}} \right) \quad \dotsb (1) $$

The centripetal acceleration control unit 402 provides acceleration in the direction in which an image moves, with respect to an amount of movement of the center of the image relative to the center of the picture plane of the digital device,

That is, when the center of the image moves to the center of the picture plane, acceleration is provided in the same direction as the direction in which the image moves. If the center of the image goes beyond the center of the picture plane, acceleration is provided in the direction opposite to the direction in which the image moves, thereby reducing the possibility of overshoot.

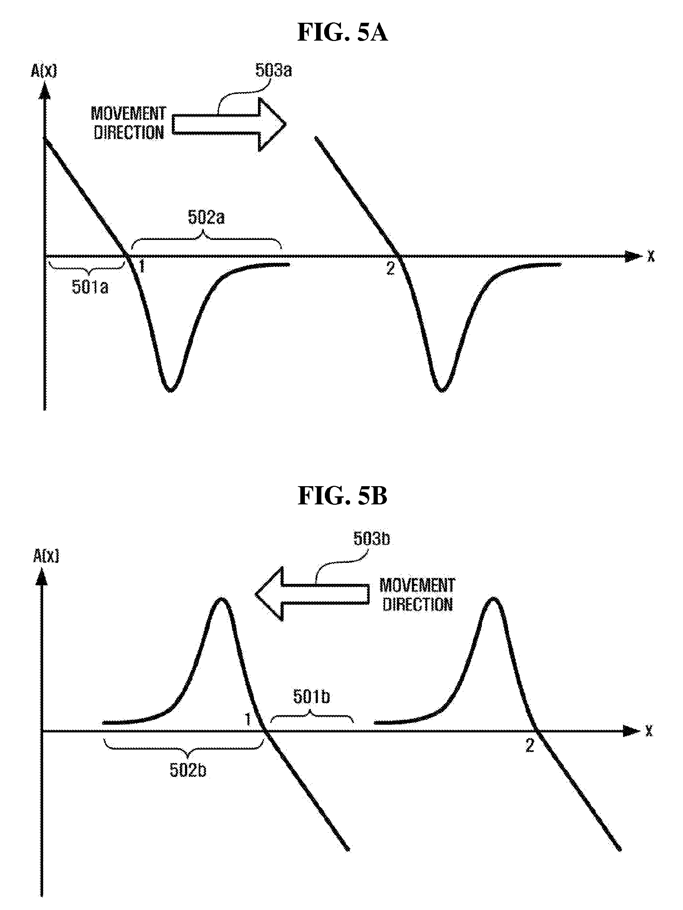

FIGS. 5A and 5B are graphs illustrating operations of a centripetal acceleration module according to an embodiment of the present invention.

Here, the X-axis indicates the position of an image in a list. Integers 1 and 2 indicate the centers of image 1 210 and image 2 220, respectively. The Y-axis indicates acceleration with respect to the position of an image.

Here, it is assumed that the center of an image matches with the coordinates center of a picture plane window.

Also, arrows 503A and 503B indicates movement directions in response to a user's tilt operation.

FIG. 5A is a diagram illustrating the center of an image and changes in acceleration with respect to the center of the image when the image moves to the right in response a tilt operation of a user.

In the graph illustrated in FIG. 5A, an interval 501A indicates a case where the center of the image approaches to the center of the picture plane. In this case, the centripetal acceleration control module 402 provides acceleration in the direction in which the image moves, thereby reducing a time taken for the center of the image to approach to the center of the picture plane.

An interval 502A indicates a case where the center of the image moves away from the center of the picture plane. In this case, the centripetal acceleration control module 402 provides acceleration in the direction opposite to the direction in which the image moves, thereby rapidly reducing the movement speed of the image and thus extending a time in which the center of the image moves away from the center of the picture plane.

FIG. 5B is a diagram illustrating the center of an image and changes in acceleration with respect to the center of the image when the image moves to the left in response a tilt operation of a user.

In the graph illustrated in FIG. 5B, an interval 501B indicates a case where the center of the image approaches to the center of the picture plane, and is the same as the case illustrated in the interval 501A of FIG. 5A.

Also, an interval 502B indicates a case where the center of the image moves away from the center of the picture plane, and is the same as the case illustrated in the interval 502A of FIG. 5A.

Meanwhile, the movement resistance control module 403 calculates a resistance corresponding to the acceleration provided by the centripetal acceleration control module 402, and applies the resistance to the image.

That is, when the center of the image moves to the center of the picture plane, the acceleration provided to the image by the centripetal acceleration control module 402 gradually decreases toward 0, and therefore, the movement resistance control module 403 does not apply the resistance to the image. Reversely, when the center of the image moves away from the center of the picture plane, the movement resistance control module 403 provides the resistance, thereby securing a time for control in order for the user to move a next image, and reducing the possibility of fluctuation.

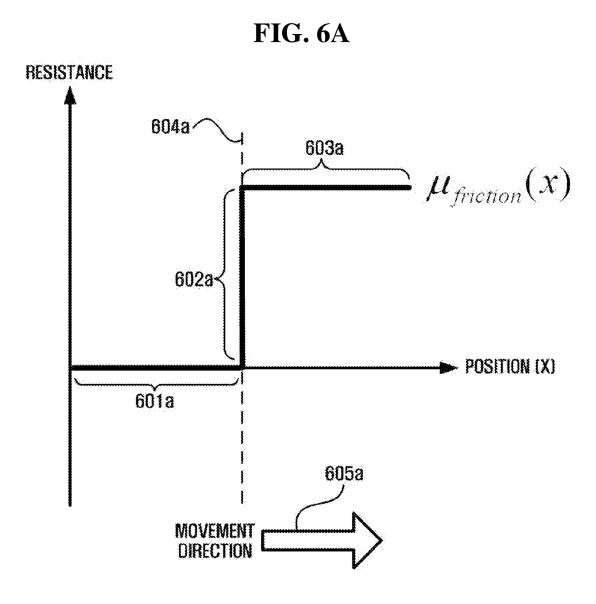

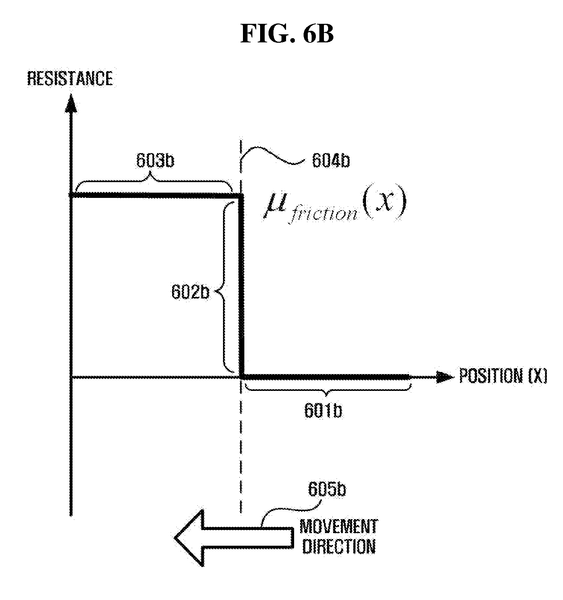

Here, when the center of the image moves away from the center of the picture plane, a relatively larger resistance value than that of when the center of the image moves to the center of the picture plane is provided. This is illustrated in FIGS. 6A and 6B.

In each of the graphs illustrated in FIGS. 6A and 6B, the X-axis indicates the position of an image in a list, the Y-axis indicates a resistance value provided to the image by the movement resistance control module 403, and a dotted line 604A and 604B indicates the center of the picture plane.

Here, it is assumed that the center of the image matches with the center of the picture plane window. Also, each arrow 605A and 605B indicates the movement direction of the image in response to a tilt operation of the user.

FIG. 6A illustrates a case where the image moves to the right in response to a tilt operation of the user. In an interval 601A in which the center of the image approaches to the center of the picture plane window, the movement resistance control module 403 does not apply resistance to the image.

Then, in an interval 602A where the center of the image matches with the center of the picture plane window, the movement resistance control module 403 rapidly increases the resistance, thereby reducing the possibility of fluctuation of the image even when a slight tilt operation occurs while the user views the image.

In an interval 603A where the center of the image moves away from the center of the picture plane, the movement resistance control module 403 maintains the resistance value for the interval 602A, thereby securing a time for control in order for the user to move a next image, and reducing the possibility of fluctuation.

FIG. 6B illustrates a case where the image moves to the left in response to a tilt operation of the user. Explanations on an interval 601B where the center of the image approaches to the center of the picture plane window, an interval 602B where the center of the image matches with the center of the picture plane window, and an interval 603B where the center of the image moves away from the center of the picture plane window are the same as those for intervals 601A through 603A illustrated in FIG. 6A.

It can be seen that in both graphs illustrated in FIGS. 6A and 6B, the resistance values for the cases (intervals 603A and 603B) where the center of the image moves away from the center of the picture plane window are greater than the resistance values for the cases (interval 601A and 601B) where the center of the image moves to the center of the picture plane window.

The picture plane movement parameter control module 404 calculates and updates the movement speed of an image displayed on the picture plane and the distance moved by the center of the image, based on the current tilt angle of the digital device calculated in the tilt angle calculation module 401, the acceleration value calculated in the centripetal acceleration control module 402, and the resistance value calculated in the movement resistance control module 403.

Here, the tilt angle and the acceleration value are updated by applying the resistance value, and the acceleration value based on the tilt operation of the user is updated by providing an acceleration value in proportion to the tilt angle.

Also, as the tilt angle, any one axis value among roll, pitch and yaw axes can be selected.

The position of the image with respect to time t, the speed, and the acceleration value calculated in the movement parameter control module 404 can be calculated according to the equation (2) below:

$$a_{tilt}(t) = \lambda \cdot \theta(t)$$

$$x(t+1) = \Delta t \cdot v(t)$$

$$v(t+1) = \Delta t \cdot a(t) - \mu_{friction}(x(t)) \cdot v(t)$$

$$a(t+1) = a_{tilt}(t) + a_{center\_force}(x(t))$$

$$\dots\dots(2)$$

Here, $\mu_{friction}(x(t)) \cdot v(t)$ is a friction effect, that is, a resistance value, $a_{tilt}(t)$ is acceleration in response to a tilt operation of the user, and $a_{center\_force}(x(t))$ is acceleration in the direction to the center of the image.

Meanwhile, the picture plane coordinate control module 405 determines whether or not the distance moved by the center of the image calculated in the picture plane movement parameter control module 404 exists in a predetermined region, thereby controlling the movement of the image.

If the distance moved by the center of the image calculated in the picture plane movement parameter control module 404 exists in a predetermined region, the picture plane coordinate control module 405 fixes the center of the image to the center of the picture plane, and if the calculated the distance moved by the center of the image does not exist in the predetermined region, the picture plane coordinate control module 405 outputs in real-time the position of the image on the picture plane.

Here, the predetermined region is a region obtained by separating the position on the picture plane based on parameters and the position on the picture plane where the image is actually output. The predetermined region is further broken down to a 'stable region' and a 'moving region'. The stable region is a region in which, if the center of the image is positioned within the region relative to the center of the picture plane window, the image is fixed, thereby removing fluctuation when the user views the image. The moving region is the remaining region in which the image moves, excluding the stable region described above.

The picture plane coordinate control module 405 displays in real-time the position of the image in the moving region, thereby providing a moving effect of the image, and providing feedback to the user. If the center of the image moves beyond the stable region and enters into the moving region in response to a tilt operation of the user, the picture plane coordinate control module 405 may inform the user of the movement of the image by using a vibration feedback.

For reference, in addition to the vibration, a variety of sound effects can be used for the feedback to the user, and therefore, the feedback method is not limited to the vibration.

Here, when the center of the image enters into the stable region moving away from the moving region, the picture plane coordinate control module 405 may inform the user that the image is in a viewable state, by using vibration as the feedback.

Accordingly, the time when the vibration feedback is generated and provided to the user by the picture plane coordinate control module 405 is not limited to the time when the center of the image moves beyond the stable region and enters into the moving region by the tilt operation of the user, and can vary according to embodiments of the present invention, which can be clearly understood.

In the current embodiment of the present invention, a case where a feedback is provided to the user by using vibration when the center of the image moves from the moving region to the stable region, will now be explained.

By dividing the stable region and the moving region in the picture plane coordinate control module 405, when images are moved in response to a tilt operation in order to view an image, the time when the entire image is displayed on the picture plane window can be extended and the time of partial representation of an image that can occur when images are moved can be reduced.

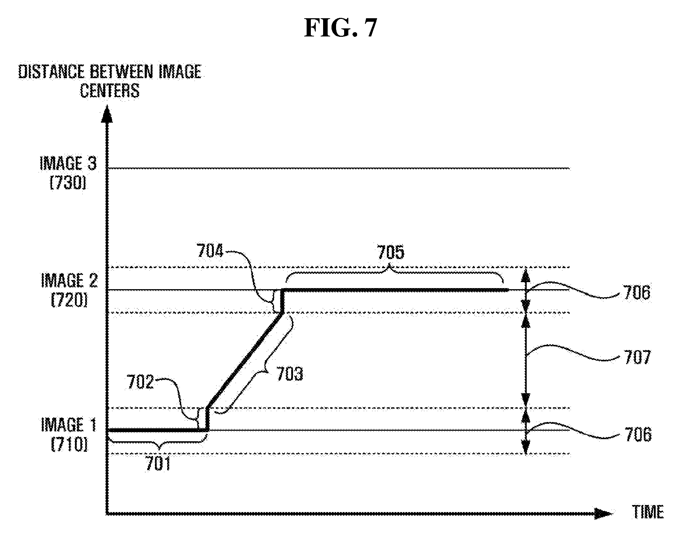

FIG. 7 is a graph illustrating operations of the picture plane coordinate control module 405 according to an embodiment of the present invention.

In the graph illustrated in FIG. 7, the X-axis indicates the flow of time, the Y-axis indicates the centers of images and the distance between the centers when images are arranged as a list, and stable regions 706 and a moving region 707 are displayed about the center of each image.

Here, it is assumed that the user is currently viewing image 1 710, and performs a tilt operation in order to view image 2 720.

An interval 701 is an interval in which the user views image 1 710, and the center of the image is fixed to the center of the picture plane window. Accordingly, there is no movement of the image and the center of the image is in the stable region 706.

An interval 702 is an interval in which a slight tilt operation of the user occurs. In interval 702, the slight tilt operation may be caused by an incorrect motion of the user, or may be abeginning of a tilt operation in order to move image 2 720, which is the next image.

As described above, if the slight tilt operation is performed in the stable region 705 as illustrate din FIG. 7, the picture plane coordinate control module 405 makes image 1 that is currently viewed by the user, not move from the center of the picture plane window.

In an interval 703, the displayed image is changed from image 1 710 to image 2 720, as a bigger tilt operation is performed, that is, the digital device is further tilted, in interval 702.

Since the interval 703 is in the moving region 707 in which the center of the image moves beyond a stable region, the picture plane coordinate control module 405 outputs in real-time on the picture plane a process in which the displayed image is changed from image 1 710 to image 2 720.

That is, the interval 703 is an interval in which the user can watch the movement of images in real-time.

An interval 704 is an interval indicating a state in which the center of image 2 720 approaches closely to the center of the picture plane, and the interval 704 is included in the stable region 706.

Here, the picture plane coordinate control module 405 quickly fixes the center of image 2 720 at the center of the picture plane, thereby allowing the user to view image 2 720.

An interval 705 is an interval in which the user can view image 2 720.

For reference, when the graph illustrated in FIG. 7 is compared with the graph illustrated in FIG. 3, it can be seen from the graph illustrated in FIG. 7 that the continuous images can be viewed without overshoot and fluctuation.

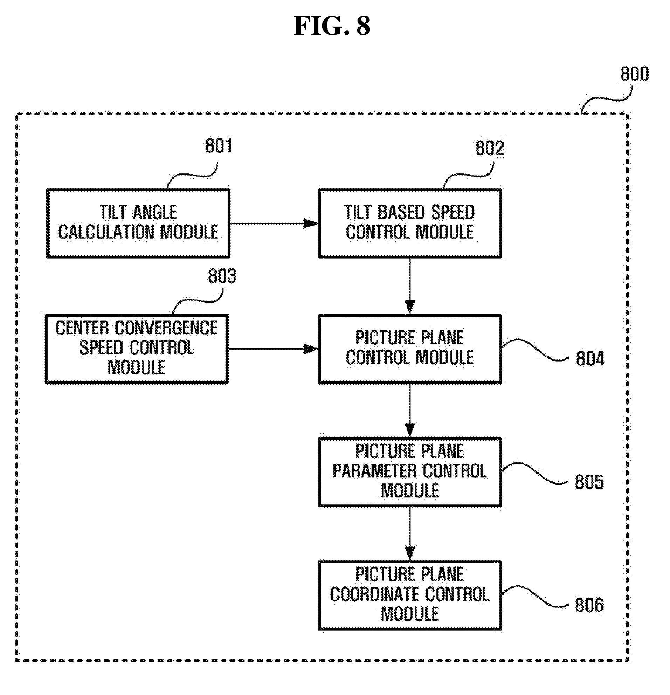

FIG. 8 is a block diagram illustrating a structure of an apparatus (800) for moving a list on a picture plane according to another embodiment of the present invention.

The apparatus 800 for moving a list on a picture plane according to another embodiment of the present invention includes a tilt angle calculation module 801 calculating a current tilt angle, a tilt based speed control module 802 calculating a speed based on input tilt angles and providing the calculated speed to an image, a center convergence speed control module 803 calculating a center convergence speed with respect to the center of the picture plane of a digital device and providing the calculated center convergence speed to the image, a picture plane movement speed control module 804 calculating a maximum movement speed of the image based on the position of the center of the image and providing the calculated maximum movement speed to the image, a picture plane parameter control module 805 updating the movement speed of the image and the moving position of the center of the image by calculating the same based on the tilt based speed, the center convergence speed and the maximum movement speed, and a picture plane coordinate control module 806 controlling the movement of the image by determining whether or not the moving position of the center of the image exists in a predetermined region.

In the apparatus 800 for moving a list on a picture plane according to another embodiment of the present invention, as shown in FIG. 8, the tilt angle calculation module 801 is substantially the same as the tilt angle calculation module 401, and a detailed explanation will not be given.

The tilt based speed control module 802 calculates a speed based on input tilt angles and provides the calculated speed to the image. As the tilt angle increases, the speed provided to the image becomes increased.

Assuming that $\theta(t)$ is a tilt angle at time t, vtilt is a velocity at a tilt angle, a velocity with respect to the tilt angle at time t is represented by vtilt($\theta(t)$).

For reference, the tilt based speed is preferably increased in proportion to an increase in the tilt angle. An exemplary tilt based speed used in the present invention can be given in the following equation:

$$\text{vtilt}(\theta(t))=\text{sign}(\theta(t))\cdot\theta(t)2.$$

The center convergence speed control module 803 calculates a center convergence speed with respect to the center of the picture plane of a digital device, which has moved by the speed vtilt($\theta(t)$) calculated by the tilt based speed control module 802 and provides the calculated center convergence speed to the image.

Here, the center convergence speed means a speed for making the center of the picture plane coincide with the center of the image. The center convergence speed control module 803 attempts to make the center of the picture plane coincide with the center of the image such that it provides the image with the speed in the same direction with the direction in which the image moves when the center of the image moves to the center of the picture plane, while it provides the image with the speed in the opposite direction in which the image moves when the center of the image moves away from the center of the picture plane.

Accordingly, when the center of the image moves away from the center of the picture plane, the center convergence speed control module 803 provides the image with a relatively larger center convergence speed than that provided when the center of the image moves to the center of the picture plane.

In this case, assuming that x(t) is a position of the center of an image with respect to the center of a picture plane at time t, and vattractor is a center convergence speed with the center of the image, the center convergence speed at the position of the center of the image at time t can be given by vattractor (x(t)). For reference, a value of the center convergence speed vattractor (x (t)) preferably increases as the position x (t) of the center of the image becomes distant from the center of the picture plane.

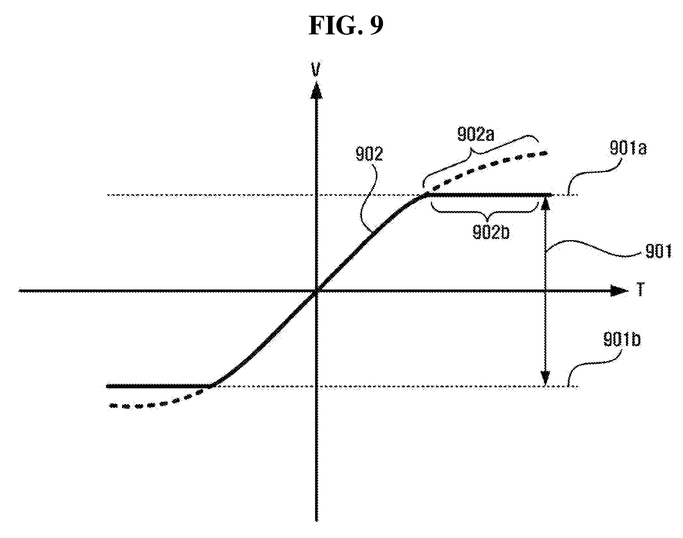

The picture plane movement speed control module 804 calculates a maximum movement speed of the image based on the distance between the center of the picture place and the center of the image and provides the calculated maximum movement speed to the image. FIG. 9 is a graph illustrating the picture plane movement speed controlled by a picture plane movement speed control module. In FIG. 9, which the X-axis indicates the flow of time, the Y-axis indicates the change of speed, and a maximum movement speed 901a and a minimum movement speed 901b of the image are shown. Here, the movement speed of the image is set to be within a predetermined range 901 by the picture plane movement speed control module 804. In addition, a curve 902 shown in FIG. 9 indicates the sum of the tilt based speed of the image, as calculated by the tilt based speed control module 802, and the center convergence speed, as calculated by center convergence speed control module 803. If the sum of the tilt based speed and the center convergence speed is out of a predetermined range, the picture plane movement speed control module 804 controls the movement speed of the image viewed on the picture plane not to deviate from predetermined range 901. For example, if the movement speed of the image exceeds the maximum movement speed 901a (see a section 902a in FIG. 9), the picture plane movement speed control module 804 controls the movement speed of the image viewed on the picture plane not to exceed the maximum movement speed 901a (see a section 902b in FIG. 9), thereby preventing overshoot due to an excessive tilt angle.

Accordingly, the movement speed of the image, as denoted by v(t), at time t can be given by the equation (3):

$$v(t) = vtilt(\theta(t)) + vattractor(x(t)$$

$$\dots(3)$$

That is to say, the movement speed of the image can be expressed as the sum of the tilt based speed of the image and the center convergence speed, which can be rewritten using the movement speed of the image being within a predetermined range, set by the picture plane movement speed control module 804, as expressed by the equation (4):

$$vf(t) = sign (v(t)) \cdot min(vm(x(t)), |(v(t))|)$$

$$\dots(4)$$

The picture plane parameter control module 805 updates the movement speed of the image viewed on the picture plane and the moving position of the center of the image by calculating the same based on the tilt based speed calculated by the tilt based speed control module 802, the center convergence speed calculated by the center convergence speed control module 803, and the maximum movement speed calculated by picture plane movement speed control module 804. Assuming that x(t) is a position of the center of an image with respect to the center of a picture plane at time t, and $\Delta$ is a variation of time, the moving position of the center of the image, which is updated according to the variation of time by means of the picture plane parameter control module 805, is expressed by the equation (5) :

$$x(t+\Delta) = x(t) + \Delta \cdot vf(t)$$

$$\dots(5)$$

Meanwhile, thepictureplane coordinate controlmodule806controls the movement of the image by determining whether or not the moving position of the center of the image, calculated by the picture plane parameter control module 805, exists in a predetermined region.

The picture plane coordinate control module 806 is substantially the same as the picture plane movement parameter control module 404, and a detailed explanation will not be given.

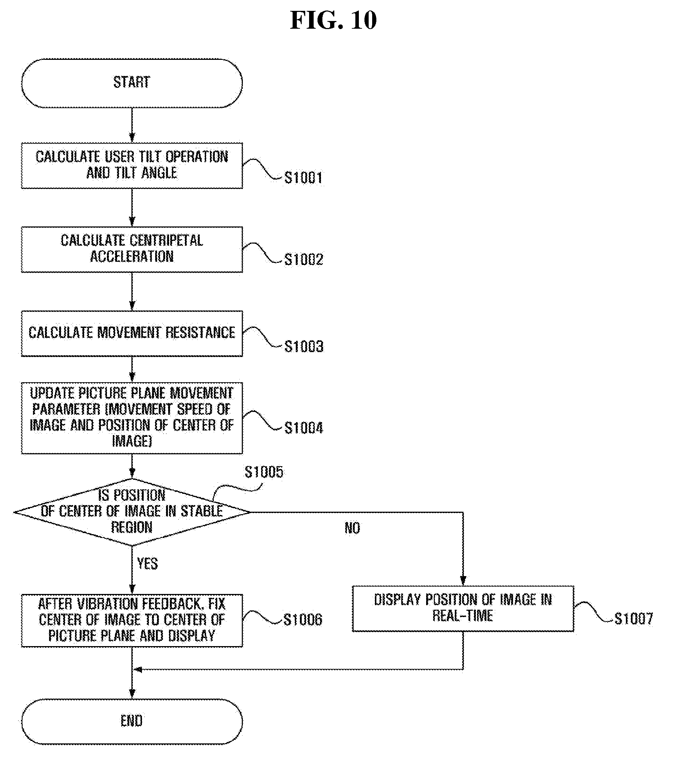

FIG. 10 is a flowchart illustrating operations of a method of viewing continuous images through tilt operations according to an embodiment of the present invention.

If the user performs a tilt operation, the tilt angle calculation module 401 calculates the ratio between gravitational components measured in a 3-axis acceleration sensor,and calculates a pitch angle, and a roll angle, thereby calculating a current tilt angle in operation S1001.

The centripetal acceleration control module 402 calculates and provides acceleration in the direction in which an image moves, with respect to an amount of movement of the center of the image relative to the center of the picture plane of the digital device in operation S1002.

That is, when the center of the image moves to the center of the picture plane, the centripetal acceleration control module 402 provides acceleration in the direction in which the imagemoves, and when the center of the image moves beyond the center of the picture plane, the centripetal acceleration control module 402 provides acceleration in the direction opposite to the direction in which the image moves, thereby reducing the possibility of overshoot.

The movement resistance control module 403 calculates a resistance corresponding to the acceleration provided in the centripetal acceleration control module 402, and applies the resistance to the image in operation S1003.

That is, when the center of the image moves to the center of the picture plane, the acceleration provided to the image by the centripetal acceleration control module 402 gradually decreases to 0, and therefore the movement resistance control module 403 does not apply the resistance to the image. Reversely, when the center of the image moves away from the center of the picture plane, the movement resistance control module 403 provides a resistance, thereby securing a time for control in order for the user to move a next image, and reducing the possibility of fluctuation.

The picture plane movement parameter control module 404 calculates and updates the movement speed of an image displayed on the picture plane and the distance moved by the center of the image, based on the current tilt angle of the digital device calculated in the tilt angle calculation module 401, the acceleration value calculated in the centripetal acceleration control module 402, and the resistance value calculated in the movement resistance control module 403 in operation S1004.

The picture plane coordinate control module 405 determines whether or not the current position of the image exists in a stable region relative to the center of the picture plane in operation S1005.

If it is determined that the current position exists in the stable region, the picture plane coordinate control module 405 fixes the center of the image to the center of the picture plane and displays the image in operation S1006.

Here, the picture plane coordinate control module 405 can inform the user through vibration as a feedback that the center of the image is positioned at the center of the picture plane. Since a variety of sound effects can be used for the feedback to the user, the feedback method is not limited to the vibration.

If the result of the determination in operation S1005 indicates that the center of the image exists in a moving region, the picture plane coordinate control module 405 updates and displays in real-time the position of the image, thereby reducing the possibility of partial representation in operation S1007.

For reference, operations S1001 through S1007 can be repeatedly performed if the user continuously performs a tilt operation even after operation S1006.

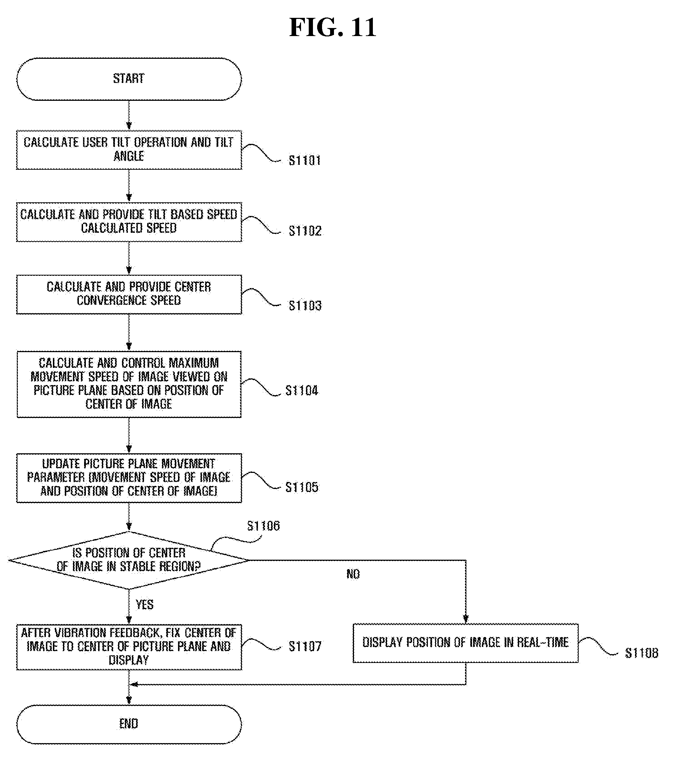

FIG. 11 is a flowchart illustrating operations of amethodof viewing continuous images through tilt operations according to another embodiment of the present invention.

If the user performs a tilt operation, the tilt angle calculation module 801 calculates the ratio between gravitational components measured in a 3-axis acceleration sensor, and calculates a pitch angle, and a roll angle, thereby calculating a current tilt angle in operation S1101.

The tilt based speed control module 802 calculates a speed based on input tilt angles and provides the calculated speed to the image in operation S1102.

The center convergence speed control module 803 calculates a center convergence speed with respect to the center of the picture plane of a digital device, and provides the calculated center convergence speed to the image in operation S1103.

That is, the center convergence speed control module 803 provides the image with the speed in the same direction with the direction in which the image moves when the center of the image moves to the center of the picture plane, while it provides the image with the speed in a direction opposite to that in which the image moves when the center of the image moves away from the center of the picture plane. In addition, the greater the distance between the center of the image and the center of the picture plane becomes, the greater the center convergence speed is provided to the image, making the image more likely converge into the center of the picture plane.

The picture plane movement speed control module 804 controls a maximum movement speed of the image by calculating a maximum movement speed of the image based on the distance between the center of the picture place and the center of the image and providing the calculated maximum movement speed to the image in operation S1104.

If the tilt based speed is so high that it maybe out of a predetermined range, that is, if the movement speed of the image exceeds the maximum movement speed in a predetermined range, the picture plane movement speed control module 804 controls the movement speed of the image viewed on the picture plane not to deviate from the minimum movement speed in the predetermined range, thereby preventing overshoot due to an excessive tilt angle. In operation S1105, the picture plane parameter control module 805 updates the movement speed of the image viewed on the picture plane and the moving position of the center of the image by calculating the same based on the tilt based speed calculated by the tilt based speed control module 802, the center convergence speed calculated by the center convergence speed control module 803, and the maximum movement speed calculated by picture plane movement speed control module 804.

Then, the picture plane coordinate control module 806 controls the movement of the image by determining whether or not the current position of the image exists in a stable region relative to the center of the picture plane in operation S1106.

If it is determined that the current position exists in the stable region, the picture plane coordinate control module 806 fixes the center of the image to the center of the picture plane and displays the image in operation S1107.

Here, the picture plane coordinate control module 806 can inform the user through vibration as a feedback that the center of the image is positioned at the center of the picture plane. Since a variety of sound effects can be used for the feedback to the user, the feedback method is not limited to the vibration.

If the result of the determination in operation S1106 indicates that the center of the image exists in a moving region, the picture plane coordinate control module 806 updates and displays in real-time the position of the image, thereby reducing the possibility of partial representation in operation S1108.

For reference, operations S1101 through S1108 can be repeatedly performed if the user continuously performs a tilt operation even after operation S1107.

According to the apparatus and method for moving a list on a picture plane of the present invention as described above, one or more of the following effects can be achieved.

Overshoot in which when a next image is moved, an image undesired by a user is displayed can be prevented.

Also, in order to place an image at the center of the picture plane, tilting the device to the left or right is not needed, and even through a slight trembling of hands exists, the image on the picture plane does not tremble.

Also, the time in which the entire image is displayed on the picture plane extends, and partial representation that can occur when images are moved can be prevented.

Also, when the image is positioned at the center of the picture plane, or when the image moves beyond the center of the picture plane, feedback can be provided to the user by using vibration or sound effects, thereby allowing the user to easily adjust the tilt operation.

In concluding the detailed description, those skilled in the art will appreciate that many variations and modifications can be made to the preferred embodiments without substantially departing from the principles of the present invention. Therefore, the disclosed preferred embodiments of the invention are used in a generic and descriptive sense only and not for purposes of limitation.

**Claims**

1. An apparatus for moving a list on a picture plane, comprising:

    a centripetal acceleration control module providing acceleration in the direction in which an image moves, with respect to an amount of movement of the center of the image relative to the center of a picture plane of a digital device;
    amovement resistance control module calculating a resistance corresponding to the provided acceleration, and applying the resistance to the image;
    a picture plane movement parameter control module calculating the movement speed of the image displayed on the picture plane and a distance moved by the center of the image, based on at least one of a current input tilt angle, the acceleration value, and the resistance value, thereby updating the movement speed and the distance moved by the center of the image.

2. The apparatus of claim 1, further comprising:

    a picture plane coordinate control module determining whether or not the calculated distance moved by the center of the image exists in a predetermined region, thereby controlling the movement of the image.

3. The apparatus of claim 1, further comprising a tilt angle calculation module calculating a current tilt angle.

4. The apparatus of claim 1, wherein when the center of the image moves to the center of the picture plane, the centripetal acceleration control module provides acceleration to the image in the direction in which the image moves.

5. The apparatus of claim 1, wherein when the center of the image moves beyond the center of the picture plane, the centripetal acceleration control module provides acceleration in the direction opposite to the direction in which the image moves.

6. The apparatus of claim 1, wherein when the center of the image moves beyond the center of the picture plane, the movement resistance control module provides a resistance value greater than a resistance value provided when the center of the image moves to the center of the picture plane.

7. The apparatus of claim 2, wherein when the calculated distance moved by the center of the image exists in the predetermined region, the picture plane coordinate control module fixes the center of the image to the center of the picture plane.

8. The apparatus of claim 2, wherein when the calculated the distance moved by the center of the image does not exist in the predetermined region, the picture plane coordinate control module outputs in real-time the position of the image on the picture plane.

9. The apparatus of claim 2, wherein the picture plane coordinate control module provides feedback to the user according to the movement of the center of the image.

**10.** An apparatus for moving a list on a picture plane, comprising:

a tilt based speed control module calculating a speed based on input tilt angles and providing the calculated speed to an image;

a center convergence speed control module calculating a center convergence speed with respect to the center of the picture plane of a digital device and providing the calculated center convergence speed to the image;

a picture plane movement speed control module calculating a maximum movement speed of the image based on the position of the center of the image and providing the calculated maximum movement speed to the image; and

a picture plane parameter control module updating the movement speed of the image and the moving position of the center of the image by calculating the same based on the tilt based speed, the center convergence speed and the maximum movement speed.

**11.** The apparatus of claim 10, further comprising a picture plane coordinate control module controlling the movement of the image by determining whether or not the moving position of the center of the image exists in a predetermined region.

**12.** The apparatus of claim 10, further comprising a tilt angle calculation module calculating a current tilt angle.

**13.** A method of moving a list on a picture plane comprising:

controlling centripetal acceleration by providing acceleration in the direction in which an image moves, with respect to an amount of movement of the center of the image relative to the center of a picture plane of a digital device;

controlling movement resistance by calculating a resistance corresponding to the provided acceleration and applying the resistance to the image;

controlling picture plane movement parameter by calculating the movement speed of the image displayed on the picture plane and the distance moved by the center of the image, based on at least one of a current input tilt angle, the acceleration value, and the resistance value, and updating the movement speed and the distance moved by the center of the image.

**14.** The method of claim 13, further comprising controlling a picture plane coordinate by determining whether or not the calculated distance moved by the center of the image exists in a predetermined region and controlling the movement of the image.

**15.** The method of claim 13, further comprising calculating a current tilt angle.

**16.** The method of claim 13, wherein when the center of the image moves to the center of the picture plane, the controlling of the centripetal acceleration comprises providing acceleration to the image in the direction in which the image moves.

**17.** The method of claim 13, wherein when the center of the image moves beyond the center of the picture plane, the controlling of the centripetal acceleration comprises providing acceleration in the direction opposite to the direction in which the image moves.

**18.** The method of claim 13, wherein when the center of the image moves beyond the center of the picture plane, the controlling of the movement resistance comprises providing a resistance value greater than a resistance value provided when the center of the image moves to the center of the picture plane.

**19.** The method of claim 14, wherein when the calculated distance moved by the center of the image exists in the predetermined region, the controlling of the picture plane coordinate comprises fixing the center of the image to the center of the picture plane.

**20.** The method of claim 14, wherein when the calculated distance moved by the center of the image does not exist in the predetermined region, the controlling of the picture plane coordinate comprises outputting in real-time the position of the image on the picture plane.

**21.** The method of claim 14, wherein the controlling of the picture plane coordinate comprises providing feedback to the user according to the movement of the center of the image.

22. A method of moving a list on a picture plane comprising:

controlling a tilt based speed by calculating a speed based on input tilt angles and providing the calculated speed to the image;
controlling a center convergence speed by calculating a center convergence speed with respect to the center of the picture plane of a digital device and providing the calculated center convergence speed to the image;
controlling a picture plane movement speed by calculating a maximum movement speed of the image based on the position of the center of the image and providing the calculated maximum movement speed to the image; and
controlling a picture plane parameterby updating the movement speed of the image and the moving position of the center of the image by calculating the same based on the tilt based speed, the center convergence speed and the maximum movement speed.

23. The method of claim 22, further comprising controlling the movement of the image by determining whether or not the moving position of the center of the image exists in a predetermined region.

24. The method of claim 22, further comprising calculating a current tilt angle.

# FIG. 1 (PRIOR ART)

IMAGE 1
(110)

IMAGE 2
(120)

IMAGE 3
(130)

## FIG. 2A (PRIOR ART)

IMAGE 1
(210)

IMAGE 2
(220)

IMAGE 3
(230)

MOVING FROM
IMAGE 1 TO
IMAGE 3

# FIG. 2B

# FIG. 2C

IMAGE 1
(210)

IMAGE 2
(220)

IMAGE 3
(230)

VIEW IMAGE 1

MAINTAIN
DIGITAL
DEVICE
HORIZONTALLY
AFTER TILT
OPERATION

PARTS OF IMAGE 1 AND
IMAGE 2 ARE DISPLAYED
ON PICTURE PLANE

# FIG. 3

# FIG. 4

400

TILT ANGLE
CALCULATION
MODULE ⟋ 401

CENTRIPETAL
ACCELERATION
CONTROL MODULE ⟋ 402

MOVEMENT
RESISTANCE
CONTROL MODULE ⟋ 403

PICTURE PLANE
MOVEMENT
PARAMETER
CONTROL MODULE ⟋ 404

PICTURE PLANE
COORDINATE
CONTROL MODULE ⟋ 405

**FIG. 5A**

**FIG. 5B**

# FIG. 6A

# FIG. 6B

RESISTANCE

603b

604b

$\mu_{friction}(x)$

602b

POSITION (X)

601b

605b

MOVEMENT
DIRECTION

# FIG. 7

# FIG. 8

800

801

**TILT ANGLE CALCULATION MODULE**

802

**TILT BASED SPEED CONTROL MODULE**

803

**CENTER CONVERGENCE SPEED CONTROL MODULE**

**PICTURE PLANE CONTROL MODULE** — 804

**PICTURE PLANE PARAMETER CONTROL MODULE** — 805

**PICTURE PLANE COORDINATE CONTROL MODULE** — 806

# FIG. 9

# FIG. 10

```
          ┌─────────────────┐
          │      START      │
          └────────┬────────┘
                   │
                   ▼
   ┌───────────────────────────────┐
   │  CALCULATE USER TILT OPERATION │
   │         AND TILT ANGLE         │────S1001
   └───────────────┬───────────────┘
                   │
                   ▼
   ┌───────────────────────────────┐
   │    CALCULATE CENTRIPETAL       │
   │         ACCELERATION           │────S1002
   └───────────────┬───────────────┘
                   │
                   ▼
   ┌───────────────────────────────┐
   │  CALCULATE MOVEMENT RESISTANCE │────S1003
   └───────────────┬───────────────┘
                   │
                   ▼
   ┌───────────────────────────────┐
   │  UPDATE PICTURE PLANE MOVEMENT │
   │  PARAMETER (MOVEMENT SPEED OF  │
   │  IMAGE AND POSITION OF CENTER OF│───S1004
   │           IMAGE)               │
   └───────────────┬───────────────┘
                   │        S1005
                   ▼
           ╱─────────────────╲
          ╱    IS POSITION     ╲      NO      ┌──────────────────────┐
         ⟨ OF CENTER OF IMAGE IN STABLE⟩──────────▶│  DISPLAY POSITION OF  │
          ╲      REGION       ╱               │    IMAGE IN           │───S1007
           ╲─────────────────╱               │    REAL-TIME          │
                   │ YES                      └──────────┬───────────┘
                   ▼                                     │
   ┌───────────────────────────────┐                    │
   │  AFTER VIBRATION FEEDBACK, FIX │                    │
   │  CENTER OF IMAGE TO CENTER OF  │────S1006           │
   │  PICTURE PLANE AND DISPLAY     │                    │
   └───────────────┬───────────────┘                    │
                   │◀───────────────────────────────────┘
                   ▼
          ┌─────────────────┐
          │       END       │
          └─────────────────┘
```

# FIG. 11

```
                    ┌─────────────────┐
                    │      START      │
                    └─────────────────┘
                             │
                             ▼
        ┌──────────────────────────────────────┐
        │ CALCULATE USER TILT OPERATION AND TILT │ ～ S1101
        │               ANGLE                    │
        └──────────────────────────────────────┘
                             │
                             ▼
        ┌──────────────────────────────────────┐
        │ CALCULATE AND PROVIDE TILT BASED SPEED │ ～ S1102
        │            CALCULATED SPEED            │
        └──────────────────────────────────────┘
                             │
                             ▼
        ┌──────────────────────────────────────┐
        │     CALCULATE AND PROVIDE CENTER      │ ～ S1103
        │          CONVERGENCE SPEED            │
        └──────────────────────────────────────┘
                             │
                             ▼
        ┌──────────────────────────────────────┐
        │     CALCULATE AND CONTROL MAXIMUM     │
        │   MOVEMENT SPEED OF IMAGE VIEWED ON   │ ～ S1104
        │    PICTURE PLANE BASED ON POSITION OF │
        │           CENTER OF IMAGE             │
        └──────────────────────────────────────┘
                             │
                             ▼
        ┌──────────────────────────────────────┐
        │     UPDATE PICTURE PLANE MOVEMENT     │
        │   PARAMETER (MOVEMENT SPEED OF IMAGE  │ ～ S1105
        │    AND POSITION OF CENTER OF IMAGE)   │
        └──────────────────────────────────────┘
                             │
                             ▼              S1106
                      ╱─────────────╲
                     ╱ IS POSITION OF ╲         NO
                    ╱ CENTER OF IMAGE   ╲─────────────────┐
                    ╲ IN STABLE REGION? ╱                 │
                     ╲────────┬────────╱                  │
                          YES │                           ▼
        ┌──────────────────────────────────────┐  ┌──────────────────────────────────┐
        │  AFTER VIBRATION FEEDBACK, FIX CENTER OF│  │ DISPLAY POSITION OF IMAGE IN REAL-TIME│ ～ S1108
        │ IMAGE TO CENTER OF PICTURE PLANE AND    │ ～ S1107 └──────────────────────────────────┘
        │              DISPLAY                    │         │
        └──────────────────────────────────────┘          │
                             │◄───────────────────────────┘
                             ▼
                    ┌─────────────────┐
                    │       END       │
                    └─────────────────┘
```

**EP 1 914 622 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060100505
- KR 1020070002140
- KR 2004092217